# NEUE EUROPÄISCHE PATENTSCHRIFT

(11) **EP 2 901 035 B2**
(45) Veröffentlichungstag und Bekanntmachung des Hinweises auf die Entscheidung über den Einspruch: **18.05.2022**
(45) Hinweis auf die Patenterteilung: 30.05.2018
(21) Anmeldenummer: 13765633.6
(22) Anmeldetag: 19.08.2013
(51) Int. Cl.: F16D 13/75

(54) **KUPPLUNGSVORRICHTUNG**
CLUTCH DEVICE
DISPOSITIF D'EMBRAYAGE

(30) Priorität: 25.09.2012 DE 102012217235
(43) Veröffentlichungstag der Anmeldung: 05.08.2015
(73) Patentinhaber: Schaeffler Technologies AG & Co. KG, 91074 Herzogenaurach (DE)
(72) Erfinder: SCHNEIDER, Michael, 76534 Baden-Baden (DE)
(86) Internationale Anmeldenummer: PCT/DE2013/200129
(87) Internationale Veröffentlichungsnummer: WO 2014/048426

(56) Entgegenhaltungen:
- EP-A1- 2 682 624
- WO-A1-2009/056092
- DE-A1-102008 051 100
- DE-A1-102010 045 791
- DE-A1-102011 011 917
- DE-A1-102011 084 753
- DE-A1-102011 086 455
- DE-A1-102011 104 403
- DE-A1-102012 201 402
- FR-A1- 2 804 186
- FR-A1- 2 847 626

## Beschreibung

Die vorliegende Erfindung betrifft eine Kupplungsvorrichtung gemäß dem Oberbegriff des Patentanspruchs 1.

Eine in der WO 98/12444 A1 offenbarte Kupplungsvorrichtung weist eine in axialer Richtung durch ein Hebelelement ein- und ausrückbare, im eingerückten Zustand reibschlüssige Drehmomentübertragungseinrichtung und eine Verschleißnachstelleinrichtung zur Detektion und Kompensation eines Verschleißzustands der Drehmomentübertragungseinrichtung auf. Die Verschleißnachstelleinrichtung beinhaltet einen drehbaren Verstellring und einen drehbar gelagerten und teilweise quer zur axialen Richtung verlagerbaren Spindeltrieb mit einem Energiespeicher zur Drehung des Verstellrings. Darüber hinaus weist die Verschleißnachstelleinrichtung eine Antriebsklinke zum Antrieb des Spindeltriebs beim Einrücken der Drehmomentübertragungseinrichtung auf.

Aus der DE 10 2010 045 791 A1 ist eine Kupplungsvorrichtung mit einer Verschleißnachstelleinrichtung, deren Anschlag einstellbar ist, bekannt.

Aus der DE 10 2011 011 917 A1 ist eine weitere Kupplungsvorrichtung mit Verschleißnachstelleinrichtung bekannt.

Aus der FR 2 804 186 A1 ist eine Kupplungsvorrichtung bekannt, die auf den Oberbegriff des Anspruchs 1 lesbar ist.

Es ist Aufgabe der vorliegenden Erfindung, bei einer Kupplungsvorrichtung der vorgenannten Art die Nachstellgenauigkeit zu erhöhen.

Erfindungsgemäß gelöst wird diese Aufgabe durch eine Kupplungsvorrichtung gemäß Patentanspruch 1 mit zumindest einer in axialer Richtung durch ein Hebelelement ein-und/oder ausrückbaren, im eingerückten Zustand reibschlüssigen Drehmomentübertragungseinrichtung und zumindest einer Verschleißnachstelleinrichtung zur Detektion und Kompensation eines Verschleißzustands der Drehmomentübertragungseinrichtung gelöst, wobei die Verschleißnachstelleinrichtung zumindest einen drehbaren Verstellring, einen drehbar gelagerten und zumindest teilweise quer zur axialen Richtung verlagerbaren Spindeltrieb mit einem Energiespeicher zur Drehung des Verstellrings, und eine Antriebsklinke zum Antrieb des Spindeltriebs beim Einrücken der Drehmomentübertragungseinrichtung aufweist. Da ein Relativweg der Antriebsklinke einstellbar ist, kann die Nachstellgenauigkeit der Kupplungsvorrichtung erhöht werden.

Bevorzugte Ausführungsbeispiele der vorliegenden Erfindung sind in den abhängigen Ansprüchen dargelegt.

Die Drehmomentübertragungseinrichtung und/oder die Verschleißnachstelleinrichtung ist/sind zumindest teilweise innerhalb eines Kupplungsgehäuses, genauer gesagt innerhalb eines Gehäusedeckels, gelagert. Die Drehmomentübertragungseinrichtung weist vorzugsweise zumindest eine Anpressplatte, zumindest eine Gegendruckplatte und zumindest eine in axialer Richtung zwischen der Anpressplatte und der Gegendruckplatte angeordnete Kupplungsscheibe auf. Die Anpressplatte ist drehfest im Kupplungsgehäuse angeordnet und bezüglich der Gegendruckplatte in axialer Richtung begrenzt verlagerbar, während die Gegendruckplatte gehäusefest angeordnet ist. Wenn die Kupplungsscheibe zwischen der Anpressplatte und der Gegendruckplatte verspannt ist, erfolgt eine reibschlüssige Übertragung des Drehmoments von der Eingangsseite der Kupplungsvorrichtung, beispielsweise vom Verbrennungsmotor eines Kraftfahrzeugs, über die Anpressplatte und die Gegendruckplatte auf die Kupplungsscheibe, um von der Kupplungsscheibe auf die Ausgangsseite der Kupplungsvorrichtung, beispielsweise auf die Eingangswelle eines Getriebes.

Durch eine auf das Hebelelement wirkende Aktoreinrichtung kann die Kupplungsvorrichtung, genauer gesagt die Drehmomentübertragungseinrichtung der Kupplungsvorrichtung, eingerückt bzw. ausgerückt werden. Bei dem Hebelelement kann es sich um eine Tellerfeder, wie sie üblicherweise bei normal-eingerückten Kupplungsvorrichtungen zum Einsatz kommt, oder um eine Hebelfeder, wie sie üblicherweise bei normal-ausgerückten Kupplungsvorrichtungen zum Einsatz kommt, handeln.

Wenn die Kupplungsvorrichtung als normal-eingerückte Kupplungsvorrichtung ausgebildet ist, überwiegt die Kraft der einrückenden Tellerfeder, die auf die Anpressplatte wirkt, im betätigungsfreien Zustand die Kraft von ausrückenden Blattfedern, die auf die Anpressplatte wirken. Bei der Betätigung wird die Tellerfeder durch die Aktoreinrichtung mit einer Kraft beaufschlagt, durch die die Tellerfeder verkippt bzw. verschwenkt wird, so dass die Kupplung ausgerückt wird. Andererseits kann die Kupplungsvorrichtung aber auch als normal-ausgerückte Kupplungsvorrichtung ausgebildet sein, das heißt als Kupplung, bei der die Kraft der ausrückenden Blattfedern, die auf die Anpressplatte wirken, im betätigungsfreien Zustand die Kraft der Hebelfeder, die auf die Anpressplatte wirkt, überwiegt. Bei der Betätigung wird die Hebelfeder durch die Aktoreinrichtung mit einer Kraft beaufschlagt, durch die die Hebelfeder verkippt bzw. verschwenkt wird, so dass die Kupplung eingerückt wird.

Die Kupplungsvorrichtung kann gleichermaßen als gedrückte Kupplungsvorrichtung, das heißt als Kupplungsvorrichtung, bei der die Aktoreinrichtung eine drückende Kraft auf die Tellerfeder bzw. die Hebelfeder ausübt, oder als gezogene Kupplungsvorrichtung, das heißt als Kupplungsvorrichtung, bei der die Aktoreinrichtung eine ziehende Kraft auf die Tellerfeder bzw. die Hebelfeder ausübt, ausgebildet sein. Ferner kann die Kupplungsvorrichtung einerseits als Trockenkupplung und andererseits als Nasskupplung ausgebildet sein. Die Kupplungsvorrichtung kann einerseits als Einzelkupplung, andererseits als Mehrfachkupplung, insbesondere als Doppelkupplung, ausgebildet sein.

Da aufgrund des Reibschlusses sowohl die Reibbeläge der Kupplungsscheibe, als auch in geringerem Maße die Reibflächen der Gegendruckplatte und der Anpressplatte einem Verschleiß unterworfen sind, weist die Kupplungsvorrichtung eine Verschleißnachstelleinrichtung auf, um die Abnahme der Dicke der Reibbeläge und der Stärke der Reibflächen in axialer Richtung der Kupplungsvorrichtung über die Lebensdauer der Kupplungsvorrichtung zu kompensieren. Die Detektion und/oder die Kompensation des Kupplungsverschleißes erfolgt vorzugsweise wegbasiert.

Die Verschleißnachstelleinrichtung weist vorzugsweise einen drehbaren Rampenring als Verstellring auf. Die Rampen des Verstellrings sind gleitbeweglich auf Gegenrampen angeordnet, die auf der der Kupplungsscheibe abgewandten Seite der Anpressplatte ausgebildet sind, auf der Anpressplatte montiert sind, oder in die Anpressplatte eingelassen sind. Hebelelementseitig weist der Verstellring eine Kontaktfläche auf, mit der das Hebelelement, genauer gesagt ein Kraftrand des Hebelelements, in Anlage bringbar ist, so dass der Verstellring in axialer Richtung der Kupplungsvorrichtung zwischen der Anpressplatte und dem Hebelelement klemmbar ist.

Zur Kompensation von Kupplungsverschleiß wird der Verstellring gedreht, so dass sich seine Rampen an den anpressplattenseitigen Gegenrampen hoch bewegen. Hierdurch vergrößert sich der Abstand zwischen der hebelelementseitigen Kontaktfläche des Verstellrings und der Anpressplatte so weit, bis der Kupplungsverschleiß, bezogen auf das Hebelement, wegmäßig kompensiert worden ist.

Da der Verstellring zum Zeitpunkt der Drehung des Spindeltriebs durch die Antriebsklinke, das heißt beim Einrücken der Drehmomentübertragungseinrichtung, zwischen der Anpressplatte und dem Hebelelement geklemmt ist, muss die Energie zur Verschleißkompensation zwischengespeichert werden, weil die Verschleißkompensation nicht entgegen der auf den Verstellring wirkenden Klemmkraft erfolgen kann. Hierzu ist der Spindeltrieb der Verschleißnachstelleinrichtung nicht nur drehbar gelagert, sondern zumindest in Teilen quer zur axialen Richtung der Kupplungsvorrichtung verlagerbar.

Ferner weist der Spindeltrieb einen Energiespeicher auf, durch den die zur Verdrehung des Verstellrings benötigte Energie zwischengespeichert wird, wenn der Verstellring zwischen der Anpressplatte und dem Hebelelement geklemmt ist und nicht verdreht werden kann. Beispielsweise handelt es sich bei dem Energiespeicher um eine Schraubenfeder, die vorzugsweise als Druckfeder ausgebildet ist, und die vorgespannt wird, wenn sich bei Blockade des drehbaren Verstellrings Teile des auf den drehbaren Verstellring wirkenden Spindeltriebs quer zur axialen Richtung der Kupplungsvorrichtung verlagern. Ist die Blockade des Verstellrings gelöst, das heißt wird die Kupplungsvorrichtung, genauer gesagt die Drehmomentübertragungseinrichtung der Kupplungsvorrichtung, ausgerückt, gibt der Energiespeicher die gespeicherte Energie ab, so dass der Spindeltrieb den Verstellring verdrehen kann, um die Verschleißkompensation durchzuführen.

Um eine Verdrehung des Spindeltriebs entgegen der Drehrichtung des zu kompensierenden Kupplungsverschleißes zu verhindern, ist vorzugsweise eine Sperreinrichtung in der Verschleißnachstelleinrichtung vorzusehen, beispielsweise in Form einer ein- oder mehrzüngigen Sperrklinke, die auf den Spindeltrieb wirkt.

Vorzugsweise weist der Spindeltrieb zumindest ein Antriebsritzel auf, mit dessen Zahnstruktur beim Einrücken der Drehmomentübertragungseinrichtung die Antriebsklinke, genauer gesagt eine Klinkenzunge der Antriebsklinke, in einen im Wesentlichen formschlüssigen Eingriff bringbar ist. "Im Wesentlichen formschlüssiger Eingriff" bedeutet in diesem Zusammenhang, dass es sich nicht um einen idealen Formschluss handeln muss, sondern dass der Eingriff hauptsächlich formschlüssig erfolgt, aber zusätzlich auch einen kraftschlüssigen Anteil enthalten kann. Beispielsweise ist es möglich, die Antriebsklinke in radialer Richtung der Kupplungsvorrichtung gegen das Antriebsritzel vorzuspannen. Die Zahnstruktur ist vorzugsweise im Außenumfang des Antriebsritzels auf dem Antriebsritzel ausgebildet. Zähne der Zahnstruktur sind vorzugsweise in Umfangsrichtung des Antriebsritzels in eine Richtung geneigt.

Der Relativweg der Antriebsklinke ist vorzugsweise bezüglich des Antriebsritzels des Spindeltriebs, mit dem die Antriebsklinke in Eingriff bringbar ist, einstellbar. Hierdurch können Bauteiltoleranzen, die insbesondere bei der Herstellung der Antriebsklinke auftreten, ausgeglichen werden, wodurch die Nachstellgenauigkeit verbessert wird.

Der Relativweg der Antriebsklinke ist mittels eines in axialer Richtung verlagerbaren Anschlags einstellbar. Dies ermöglicht eine besonders zuverlässige Erhöhung der Nachstellgenauigkeit der Verschleißnachstelleinrichtung.

Der verlagerbare Anschlag ist antriebsklinkenseitig angeordnet.

Vorzugsweise ist der verlagerbare Anschlag mittels Formschluss und/oder Kraftschluss fixierbar. Diese Art der Fixierung ermöglicht es, auf einfache Art und Weise den Anschlag zu verlagern, um auftretende Bauteiltoleranzen auszugleichen.

Gemäß einem bevorzugten Ausführungsbeispiel ist der verlagerbare Anschlag schrittweise oder stufenlos verlagerbar.

Vorzugsweise ist der verlagerbare Anschlag von außerhalb des Gehäusedeckels einstellbar. Dadurch ist es auch noch im fertig montierten Zustand der Kupplungsvorrichtung möglich, den verlagerbaren Anschlag einzustellen, um Bauteiltoleranzen auszugleichen und die Nachstellgenauigkeit im Betrieb der Kupplungsvorrichtung zu verbessern.

Die vorliegende Erfindung wird nachfolgend anhand von bevorzugten Ausführungsbeispielen in Verbindung mit den zugehörigen Figuren näher erläutert. In diesen zeigen:
- Figur 1: ein nicht erfindungsgemäßes Ausführungsbeispiel einer Kupplungsvorrichtung mit einer Verschleißnachstelleinrichtung in einem Halbschnitt,
- Figur 2: ein nicht erfindungsgemäßes Ausführungsbeispiel einer Antriebsklinke der Verschleißnachstelleinrichtung der Kupplungsvorrichtung aus Figur 1, und
- Figur 3: ein Ausführungsbeispiel der Verschleißnachstelleinrichtung der Kupplungsvorrichtung aus Figur 1.

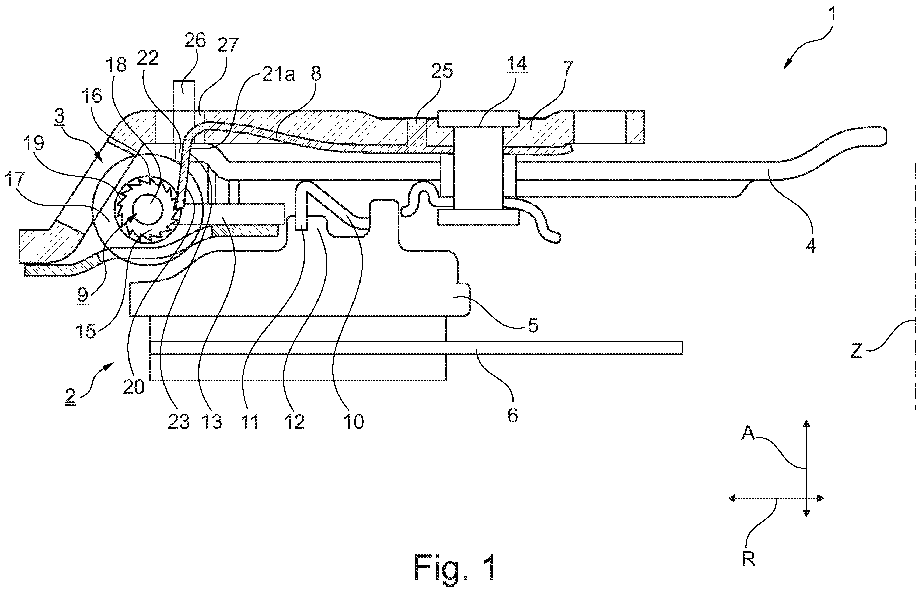

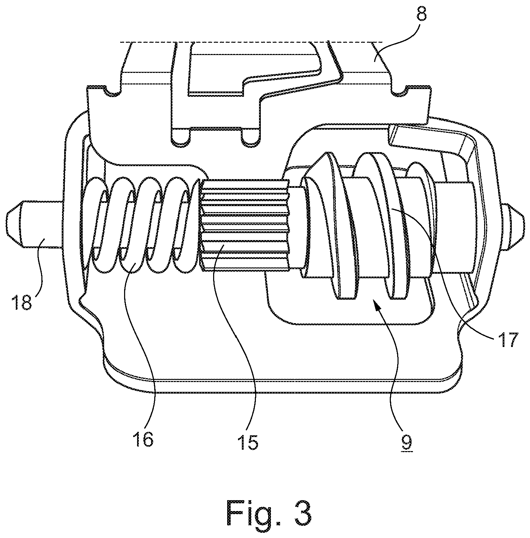

Die Figuren 1 bis 3 betreffen eine Kupplungsvorrichtung 1 bzw. eine Verschleißnachstelleinrichtung 3 der Kupplungsvorrichtung 1. Merkmale, die in der vorliegenden Beschreibung nicht als erfindungswesentlich gekennzeichnet sind, sind als optional zu verstehen. Daher betrifft die nachfolgende Beschreibung auch weitere Ausführungsbeispiele der Kupplungsvorrichtung 1 bzw. der Verschleißnachstelleinrichtung 3, die Teilkombinationen der im Folgenden zu erläuternden Merkmale aufweisen.

Die Kupplungsvorrichtung 1 kann im Antriebsstrang eines Kraftfahrzeugs zum Einsatz kommen und weist zumindest eine Drehmomentübertragungseinrichtung 2 auf. Die Drehmomentübertragungseinrichtung 2 weist zumindest eine Anpressplatte 5, zumindest eine nicht dargestellte Gegendruckplatte und zumindest eine in axialer Richtung A der Kupplungsvorrichtung 1 zwischen der Anpressplatte 5 und der Gegendruckplatte angeordnete Kupplungsscheibe 6 auf. Die Gegendruckplatte ist mit einem oder mehreren Gehäusebauteilen, beispielsweise einem Gehäusedeckel 7 der Kupplungsvorrichtung 1, fest verbunden, insbesondere verschraubt. Die Anpressplatte 5 ist im Gehäuse, insbesondere innerhalb des Gehäusedeckels 7, drehfest gelagert und in axialer Richtung A begrenzt verlagerbar. Insbesondere ist die Anpressplatte 5 mittels mehrerer, nicht dargestellter Blattfedern drehfest im Gehäuse befestigt und von der Gegendruckplatte weg, das heißt mit Bezug auf Figur 1 nach oben, vorgespannt.

Darüber hinaus weist die Kupplungsvorrichtung 1 ein Hebelelement 4 auf, das gehäuseseitig durch ein oder mehrere Lagereinrichtungen 14 verkippbar bzw. verschwenkbar abgestützt ist und durch eine nicht dargestellte Aktoreinrichtung betätigbar ist. Die Lagereinrichtung 14 kann beispielsweise mehrere in Umfangsrichtung der Kupplungsvorrichtung 1 voneinander beabstandete Bolzen, insbesondere Stufenbolzen oder Niete, aufweisen. Beispielsweise sind die Bolzen am Gehäusedeckel 7 befestigt und tragen innerhalb des Gehäusedeckels 7 Federelemente und/oder Drahtringe, durch die das Hebelelement 4 verkippbar bzw. verschwenkbar abgestützt ist.

Über einen Verstellring 10, der der Verschleißnachstellung 3, vorzugsweise einer wegbasierten Verschleißnachstellung, auf die im Folgenden eingegangen wird, zuzuordnen ist, wirkt das Hebelelement 4 mittelbar auf die Anpressplatte 5.

Das Hebelelement 4 kann als Tellerfeder für eine normal-eingerückte, in Figur 1 dargestellte Kupplungsvorrichtung 1 oder als Hebelfeder für eine normal-ausgerückte, nicht dargestellte Kupplungsvorrichtung ausgebildet sein. Bei der normal-eingerückten Kupplungsvorrichtung 1 überwiegt die wirksame Kraft des als Tellerfeder ausgebildeten Hebelelements 4 die Gegenkraft der Blattfedern, während bei der normal-ausgerückten Kupplungsvorrichtung die Gegenkraft der Blattfedern die wirksame Kraft des als Hebelfeder ausgebildeten Hebelelements überwiegt. Dementsprechend führt eine Betätigung der Tellerfeder der normal-eingerückten Kupplungsvorrichtung 1 durch die Aktoreinrichtung zum Ausrücken der Kupplungsvorrichtung, das heißt zum Abhub der Anpressplatte 5 und zur Entfernung der Anpressplatte 5 von der Gegendruckplatte, während eine Betätigung der Hebelfeder durch die Aktoreinrichtung bei der normal-ausgerückten Kupplungsvorrichtung zum Einrücken der Kupplungsvorrichtung führt.

Bei ausgerückter Kupplungsvorrichtung 1 bzw. Drehmomentübertragungseinrichtung 2 ist die Kupplungsscheibe 6 um eine Zentralachse Z relativ zum Gehäusedeckel 7 bzw. zur Anpressplatte 5 und zur Gegendruckplatte, die beide mit dem Kupplungsgehäuse bzw. dem Gehäusedeckel 7 drehfest verbunden sind, verdrehbar. Bei eingerückter Kupplungsvorrichtung 1 bzw. Drehmomentübertragungseinrichtung 2 wird ein Drehmoment von der Eingangsseite der Kupplungsvorrichtung 1, beispielsweise vom Verbrennungsmotor eines Kraftfahrzeugs oder von einem durch den Verbrennungsmotor angetriebenen Zweimassenschwungrad über das Gehäuse und sowohl die Gegendruckplatte, als auch die Anpressplatte 5 reibschlüssig auf die Kupplungsscheibe 6 übertragen. Von der Kupplungsscheibe 6, die reibschlüssig zwischen der Gegendruckplatte und der Anpressplatte 5 geklemmt ist, wird das Drehmoment zur Ausgangsseite der Kupplungsvorrichtung 1 übertragen, beispielsweise zu einer Eingangswelle eines Getriebes.

Da aufgrund des Reibschlusses sowohl die Reibbeläge der Kupplungsscheibe 6, als auch in geringerem Maße die Reibflächen der Gegendruckplatte und der Anpressplatte 5 einem Verschleiß unterworfen sind, muss über die Lebensdauer der Kupplungsvorrichtung 1 die Anpressplatte 5 immer näher an die Gegendruckplatte heranbewegt werden, um die Abnahme der Dicke der Reibbeläge und der Stärke der Reibflächen in axialer Richtung A zu kompensieren und den Reibschluss herstellen bzw. die Kupplungsvorrichtung 1, genauer gesagt die Drehmomentübertragungseinrichtung 2 der Kupplungsvorrichtung 1, einrücken zu können. Hierzu ist in der Kupplungsvorrichtung 1 die bereits zuvor erwähnte Verschleißnachstelleinrichtung 3 vorgesehen und vorzugsweise als wegbasierte Verschleißnachstelleinrichtung ausgebildet.

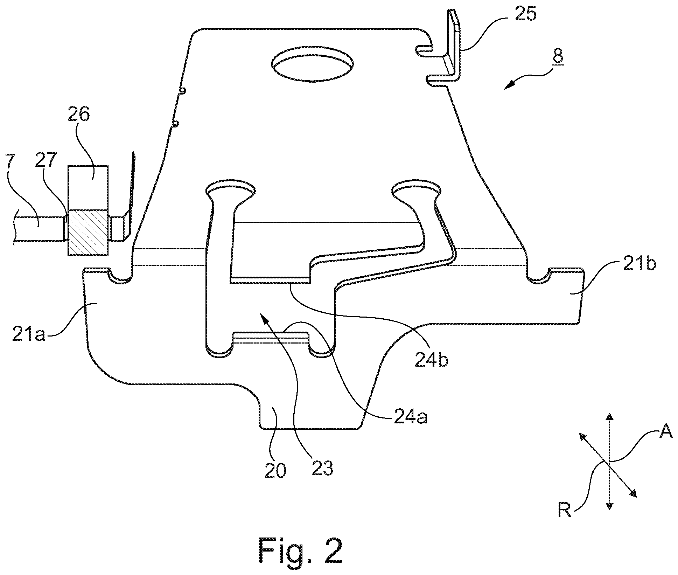

Die Verschleißnachstelleinrichtung 3 weist eine Antriebsklinke 8 auf, die zur Verdeutlichung in Figur 2 separat dargestellt ist. Die Antriebsklinke 8 ist im Wesentlichen L-förmig ausgebildet und weist einen Radialenabschnitt, der sich im Wesentlichen in radialer Richtung R der Kupplungsvorrichtung 1 erstreckt, und einen Axialabschnitt, der sich im Wesentlichen in axialer Richtung A der Kupplungsvorrichtung 1 erstreckt, auf. "Im Wesentlichen" bedeutet in diesem Zusammenhang, dass sich die entsprechenden Abschnitte der Antriebsklinke 8 nicht unbedingt exakt in radialer Richtung R oder in axialer Richtung A erstrecken müssen, sondern auch leicht zu einer Radialebene bzw. einer Axialebene geneigt sein können. Vorzugsweise ist die Antriebsklinke 8 einteilig ausgebildet, wobei ein freies Ende des Radialabschnitts zur Zentralachse Z der Kupplungsvorrichtung 1 weist und der Radialabschnitt auf seiner dem freien Ende gegenüberliegenden Seite in den Axialabschnitt der Antriebsklinke 8 übergeht.

Die Antriebsklinke 8 ist vorzugsweise als Stanzteil ausgebildet und ist weiterhin vorzugsweise aus Blech, insbesondere vorzugsweise aus Federblech, hergestellt. Die Antriebsklinke 8 kann in axialer Richtung A der Kupplungsvorrichtung 1 und/oder in radialer Richtung R der Kupplungsvorrichtung 1 eine Vorspannung aufweisen. Über ihren Radialabschnitt ist die Antriebsklinke 8 mit dem Gehäusedeckel 7 fest verbunden. Hierzu weist der Radialabschnitt der Antriebsklinke 8 beispielsweise eine Durchbrechung auf, durch die sich einer der zuvor genannten Bolzen der Lagereinrichtung 14 hindurch erstrecken. Ferner weist der Radialabschnitt vorzugsweise einen Ausrichtvorsprung 25 auf, der sich in eine entsprechende Aussparung im Gehäusedeckel 7 hinein erstreckt, um beispielsweise bei der Montage der deckelseitigen Baugruppe der Kupplungsvorrichtung 1 die korrekte Ausrichtung der Antriebsklinke 8 zu gewährleisten.

Der Axialabschnitt der Antriebsklinke 8 weist eine Aussparung 23 auf, durch die sich ein hebelelementseitiger Radialvorsprung 22 hindurch erstreckt. Der Radialvorsprung 22 ist vorzugsweise einteilig mit dem Hebelelement 4 ausgebildet und im Außenumfang des Hebelements 4 angeordnet. Über den Radialvorsprung 22 ist die Antriebsklinke 8 betätigbar und, insbesondere abhängig vom Weg, den die von der Aktoreinrichtung betätigbaren freien Enden des Hebelelements 4 beim Ein- und Ausrücken zurücklegen, in axialer Richtung A bewegbar. Die Höhe der Aussparung 23 in axialer Richtung A entspricht vorzugsweise im Wesentlichen der Stärke des Radialvorsprungs 2 bzw. des Hebelelements 4.

Die Aussparung 23 ist von einem ersten Hebelelementanschlag 24a begrenzt, auf den der Radialvorsprung 22 des Hebelements 4 wirkt, wenn die Drehmomentübertragungseinrichtung 2 eingerückt wird. Darüber hinaus ist die Aussparung 23 von einem zweiten Hebelelementanschlag 24b begrenzt, der in axialer Richtung A weiter von der Anpressplatte 5 entfernt ist als der erste Hebelelementanschlag 24a. Der Radialvorsprung 22 des Hebelelements 4 wirkt auf den zweiten Hebelelementanschlag 24b, wenn die Drehmomentübertragungseinrichtung 2 ausgerückt wird. Zur Vergrößerung der Anlagefläche am Radialvorsprung 22 des Hebelelements 4 können ein oder beide Hebelelementanschläge 24a, 24b jeweils eine umgebogene Fläche aufweisen.

Neben den Hebelelementanschlägen 24a, 24b weist der Axialabschnitt der Antriebsklinke 8 vorzugsweise zumindest einen, im dargestellten Ausführungsbeispiel zwei quer zur axialen Richtung A voneinander beabstandet und an beiden Seiten der Antriebsklinke 8 ausgebildet Anschläge 21a, 21b zur Begrenzung eines in axialer Richtung A zwischen der Antriebsklinke 8 und einem Spindeltrieb 9 der Verschleißnachstelleinrichtung 3 bzw. eines zwischen der Antriebsklinke 8 und dem Kupplungsdeckel 7 gelegenen Relativwegs während der Betätigung der Kupplungsvorrichtung 1 auf. Im dargestellten Ausführungsbeispiel ist der Relativweg der Antriebsklinke 8 einstellbar. Insbesondere ist der Relativweg der Antriebsklinke 8 bezüglich eines Antriebsritzels 15 des Spindeltriebs 9, mit dem die Antriebsklinke 8 in Eingriff bringbar ist, einstellbar. Vorzugsweise ist der Relativweg der Antriebsklinke 8 mittels zumindest eines in axialer Richtung A verlagerbaren Anschlags 26 einstellbar.

Es ist möglich, dass pro antriebsklinkenseitigen Anschlag 21a, 21b jeweils ein verlagerbarer Anschlag 26 vorgesehen ist. Es ist jedoch auch möglich, dass ein in axialer Richtung A verlagerbarer Anschlag 26 auf mehrere, voneinander beabstandete, antriebsklinkenseitige Anschläge 21a, 21b wirken kann. Insbesondere ist es möglich, dass ein verlagerbarer Anschlag 26 auf zwei antriebsklinkenseitige Anschläge 21a, 21b mittelbar oder unmittelbar wirkt.

Im dargestellten, nicht erfindungsgemäßen Ausführungsbeispiel ist der in axialer Richtung A verlagerbare Anschlag 26 deckelseitig angeordnet. Der verlagerbare Anschlag 26 ist von außerhalb des Gehäusedeckels 7 einstellbar, beispielsweise indem ein freies Ende des Anschlags 26 außerhalb des Gehäusedeckels 7, beispielsweise als Schraubenkopf, oder als mit einer Axialkraft beaufschlagbare Anlageflächen, beispielsweise in Form eines Nagelkopfes, ausgebildet ist.

Genauer gesagt weist im dargestellten Ausführungsbeispiel der Gehäusedeckel 7 eine Durchbrechung 27 mit einem Innengewinde auf. In das Innengewinde ist ein Gewindebolzen als verlagerbarer Anschlag 26 eingeschraubt, der vorzugsweise als Schraube ausgebildet ist. Ein freies Ende des Gewindebolzens ist innerhalb des Gehäusedeckels 7 mit einem der antriebsklinkenseitigen Anschläge 21a, 21b in Anlage bringbar, wobei vorzugsweise pro antriebsklinkenseitigen Anschlag 21a, 21b ein Gewindebolzen vorgesehen ist. Es ist jedoch auch möglich, dass der Gewindebolzen mittelbar, beispielsweise mittels eines Hebels oder einer Umlenkung, gleichzeitig auf beide antriebsklinkenseitige Anschläge 21a, 21b wirken kann.

Alternativ zum vorher gesagten ist es auch möglich, dass statt des oder der Gewindebolzen ein oder mehrere Klemmbolzen als verlagerbarer Anschlag 26 bzw. als verlagerbare Anschläge 26 zum Einsatz kommen. Dabei weist der Gehäusedeckel 7 eine Durchbrechung 27 auf, in die der jeweilige Bolzen geklemmt ist. Ein freies Ende des Bolzens ist innerhalb des Gehäusedeckels 7 mit einem antriebsklinkenseitigen Anschlag 21a, 21b in Anlage bringbar.

Wie zuvor erläutert, ist es somit möglich, dass der verlagerbare Anschlag 26 mittels Formschluss und/oder mittels Kraftschluss fixierbar ist. Ebenso ist es möglich, dass der verlagerbare Anschlag 26 stufenlos verlagerbar ist. Auch ist es möglich, dass der verlagerbare Anschlag 26 schrittweise, beispielsweise durch Vorsehen einer Rasterung, verlagerbar ist.

Obwohl in den Figuren in nicht-erfindungsgemäßer Weise nur ein verlagerbarer Anschlag 26, der deckelseitig angeordnet ist, dargestellt ist, ist der verlagerbare Anschlag 26 in erfindungsgemäßer Weise antriebsklinkenseitig angeordnet. Auch in diesem Zusammenhang ist der antriebsklinkenseitig vorgesehene, verlagerbare Anschlag 26 von außerhalb des Gehäusedeckels 7 einstellbar.

Der Axialabschnitt der Antriebsklinke 8 weist an seinem freien Ende eine Klinkenzunge 20 auf, die ausgebildet ist, auf den Spindeltrieb 9 der Verschleißnachstelleinrichtung 3, genauer gesagt auf das Antriebsritzel 15 des Spindeltriebs 9 der Verschleißnachstelleinrichtung 3, wirken zu können.

Der Spindeltrieb 9 ist innerhalb des Kupplungsgehäuses drehbar gelagert und insbesondere drehbar, entweder unmittelbar oder mittelbar, am Gehäusedeckel 7 befestigt. Beispielsweise ist ein Spindelträger am Gehäusedeckel 7 befestigt, wobei der Spindelträger eine Spindelachse 18 des Spindeltriebs 9 an ihren beiden distalen Enden trägt. Ein Energiespeicher 16, das Antriebsritzel 15 und eine Spindel 17 sind auf der Spindelachse 18 angeordnet. Vorzugsweise ist das Antriebsritzel 15 zwischen dem Energiespeicher 16 und der Spindel 17 angeordnet, so dass der Energiespeicher 16 zwischen dem Spindelträger und dem Antriebsritzel 15 vorspannbar ist. Im dargestellten Ausführungsbeispiel handelt es sich bei dem Energiespeicher 16 um eine druckbasierte Schraubenfeder. Jedoch sind auch andere Formen eines federbasierten, hydraulischen oder magnetischen Energiespeichers möglich.

Das Antriebsritzel 15 ist im dargestellten Ausführungsbeispiel einteilig mit der Spindel 17 ausgebildet, so dass das Antriebsritzel 15 und die Spindel 17 drehfest miteinander sind. Jedoch ist es beispielsweise auch möglich, das Antriebsritzel 15 und die Spindel 17 als separate Bauteile auszubilden, und eine drehfeste Verbindung zwischen den beiden Bauteilen, beispielsweise durch eine Kerbverzahnung, herzustellen. Zur Ermöglichung der Drehung können das Antriebsritzel 15 und die Spindel 17 drehbar auf der Spindelachse 18 gelagert sein, sich aber auch zusammen mit der Spindelachse 18 drehen, wobei im letztgenannten Fall die Spindelachse 18 ihrerseits drehbar im Spindelträger gelagert ist.

Neben der drehbaren Lagerung sind das Antriebsritzel 15 und die Spindel 17 quer zur Axialrichtung A der Kupplungsvorrichtung 1 verlagerbar, wobei bei dieser Verlagerung der Energiespeicher 16 gespannt bzw. entspannt werden kann. In Summe ist somit der Spindeltrieb 9 innerhalb der Kupplungsvorrichtung 1 drehbar gelagert und zumindest in Teilen quer zur Axialrichtung A der Kupplungsvorrichtung 1 verlagerbar.

Das Antriebsritzel 15 weist eine Zahnstruktur 19 auf, mit der die Klinkenzungen 20 in einen im Wesentlichen formschlüssigen Eingriff bringbar ist. Der Eingriff der Klinkenzunge 20 am Antriebsritzel 15 kann dadurch unterstützt werden, dass die Antriebsklinke 8 bzw. die Klinkenzunge 20 in axialer Richtung A und/oder in radialer Richtung R der Kupplungsvorrichtung 1 gegen das Antriebsritzel 15 vorgespannt ist.

Vorzugsweise weist die Zahnstruktur 19 in ihrem Außenumfang Zähne auf, die in eine Umfangsrichtung des Antriebsritzels 15 geneigt sind. Um eine Rückdrehung des Spindeltriebs 9 entgegen der Wirkung der Klinkenzunge 20 zu verhindern, ist vorzugsweise eine ein- oder mehrzüngige, nicht dargestellte Sperrklinke vorgesehen, die auf das Antriebsritzel 15 wirkt und die eine Rückdrehung des Antriebsritzels 15 und der drehfest mit dem Antriebsritzel 15 angeordneten Spindel 17 verhindert.

Die Spindel 17 des Spindeltriebs 9 ist ausgebildet und angeordnet, den Verstellring 10 anzutreiben. Hierzu befindet sich die Spindel 17 in Eingriff mit einem verstellringseitigen Eingriffselement 13, das als separates Bauteil am Verstellring 10 befestigt sein kann, das aber auch einteilig mit dem Verstellring 10 ausgebildet sein kann. Beispielsweise handelt es sich bei dem Eingriffselement 13 um eine Verzahnung, insbesondere in Form einer im Außenumfang des Verstellrings 10 angeordneten, gebogenen Zahnstange. Anstelle der bereits erwähnten Sperrklinke ist es auch möglich, durch entsprechende Gestaltung der Spindel 17 bzw. des verstellringseitigen Eingriffselements 13, in das die Spindel 17 eingreift, eine Selbsthemmung des Spindeltriebs 9 zu realisieren.

Der Verstellring 10 ist vorzugsweise als Rampenring ausgebildet. Rampen 11 des Verstellrings 10 sind auf der der Kupplungsscheibe 6 zugewandten Seite des Verstellrings 10 am Verstellring 10 ausgebildet. Die Rampen 11 des Verstellrings 10 sind gleitbeweglich auf Gegenrampen 12 angeordnet, die auf der der Kupplungsscheibe 6 abgewandten Seite der Anpressplatte 5 angeordnet sind. Die Gegenrampen 12 können als ein oder mehrere separate Bauteile ausgebildet sein, können jedoch auch einteilig mit der Anpressplatte 5 ausgebildet sein und beispielsweise in die Anpressplatte 5 eingelassen sein.

Mit seiner der Kupplungsscheibe 6 abgewandten, hebelelementseitigen Kontaktfläche befindet sich der Verstellring 10 in Anlage mit dem Hebelelement 4, insbesondere mit einem radialen Außenbereich des Hebelelements 4, wie beispielsweise einem Kraftrand des Hebelelements 4. Im eingerückten Zustand der Drehmomentübertragungseinrichtung 2 ist der Verstellring 10 zwischen dem Hebelelement 4 und der Anpressplatte 5 geklemmt. Aufgrund der in axialer Richtung A wirkenden Klemmkraft ist im eingerückten Zustand der Drehmomentübertragungseinrichtung 2 eine Kompensation des Kupplungsverschleißes nicht möglich.

Erst wenn die Klemmkraft aufgehoben ist, das heißt wenn die Drehmomentübertragungseinrichtung 2 ausgerückt ist, ist der Verstellring 10 mit seinen Rampen 11 relativ zur Anpressplatte 5 mit ihren Gegenrampen 12 verdrehbar, um Kupplungsverschleiß zu kompensieren. Bei der Verdrehung bewegen sich die Rampen 11 des Verstellrings 10 an den Gegenrampen 12 der Anpressplatte 5 hoch, wodurch sich der Abstand zwischen der hebelelementseitigen Kontaktfläche des Verstellrings 10 und der Anpressplatte 5 vergrößert, so dass die Anpressplatte 5 näher an die Gegendruckplatte heranbewegt werden kann, ohne dass sich der Weg, den das Hebelelement 4 beim Einrücken zurücklegen muss, vergrößert.

Wenn sich die Kupplungsvorrichtung 1 im eingerückten Zustand befindet und kein Kupplungsverschleiß vorliegt bzw. Kupplungsverschleiß zuvor vollständig kompensiert worden ist, befindet sich die Klinkenzunge 20 in Eingriff mit einem Zahnring der Zahnstruktur 19 des Antriebsritzels 15. Wenn die Kupplungsvorrichtung 1 ausgerückt wird, wirkt in axialer Richtung A eine Kraft auf die in radialer Richtung R innen liegenden, freien Spitzen des Hebelelements 4, wodurch das Hebelelement 4 nach innen verkippt wird. Bei der Verkippung des Hebelelements 4 drückt der Radialvorsprung 22 auf den zweiten Hebelelementanschlag 24b der Antriebsklinke 8, wodurch die Antriebsklinke 8 elastisch in axialer Richtung A, mit Bezug auf Figur 1 nach oben, bewegt wird, und die Klinkenzunge 20 vom Zahngrund kommend an der vorherigen Zahnflanke entlang gleitet. Die Gleitbewegung endet, wenn die Anschläge 21a, 21b der Antriebsklinke 8 in Anlage mit dem einstellbaren Anschlag 26 bzw. den einstellbaren Anschlägen 26 kommen. Somit ermöglicht der zumindest eine einstellbare Anschlag 26 den Ausgleich von Bauteiltoleranzen, und damit eine Verbesserung der Verschleißnachstellung, die nachfolgend erläutert wird.

Da kein Kupplungsverschleiß vorliegt, bzw. vorliegender Kupplungsverschleiß zuvor vollständig kompensiert worden ist, reicht der Relativweg zwischen der Antriebsklinke 8 und dem Antriebsritzel 15 nicht aus, damit die Klinkenzunge 20 die der vorherigen Zahnflanke vorausgehende Zahnspitze überspringt und in den vorherigen Zahngrund einrastet.

Wenn sich die Reibbeläge der Kupplungsscheibe 6 abnutzen, das heißt wenn Kupplungsverschleiß vorliegt, nähert sich die Anpressplatte 5 beim Einrücken der Kupplungsvorrichtung 1 immer mehr der Gegendruckplatte, um den Reibschluss zwischen Anpressplatte 5 und Kupplungsscheibe 6 und zwischen Gegendruckplatte und Kupplungsscheibe 6 herstellen zu können. Das Hebelelement 4 muss sich hierzu stärker nach außen verkippen, so dass sich der radiale Innenbereich mit den freien Spitzen des Hebelelements 4 mit Bezug auf Figur 1 aufstellt, während sich der radiale Außenbereich mit dem Kraftrand des Hebelelements 4 mit Bezug auf Figur 1 nach unten bewegt.

Damit einhergehend bewegt sich auch der Radialvorsprung 22 mit Bezug auf Figur 1 nach unten und wirkt auf den ersten Hebelelementanschlag 24a der Antriebsklinke 8, wodurch die im Zahngrund eingerastete Klinkenzunge 20 das Antriebsritzel 15 mit Bezug auf Figur 1 im Uhrzeigersinn verdreht. Zusammen mit dem Antriebsritzel 15 verdreht sich auch die Spindel 17, die ihrerseits mit dem Eingriffselement 13 des Verstellrings 10 in Eingriff steht. Da dieser Vorgang jedoch beim Einrücken der Kupplungsvorrichtung 1 geschieht, ist der Verstellring 10 zwischen dem Hebelelement 4 und der Anpressplatte 5 geklemmt, und kann daher nicht durch die Spindel 17 verdreht werden. Die Klemmung des Verstellrings 10 führt dazu, dass sich die Spindel 17 am verstellringseitigen Eingriffselement abstützt und sich in Richtung der Spindelachse 18, das heißt quer zur axialen Richtung A der Kupplungsvorrichtung 1, verschiebt. Da im dargestellten Ausführungsbeispiel das Antriebsritzel 15 einteilig mit der Spindel 17 ausgebildet ist, verschiebt sich das Antriebsritzel 15 ebenfalls und wirkt seinerseits auf den zwischen dem Antriebsritzel 15 und dem Spindelträger angeordneten Energiespeicher 16, wodurch der Energiespeicher 16 vorgespannt wird.

Somit wird beim Einrücken der Kupplungsvorrichtung 1 durch die Verlagerung der Spindel 17 und, im dargestellten Ausführungsbeispiel, die Verlagerung des Antriebsritzels 15 der Energiespeicher vorgespannt. Diese Vorspannung wird aufrechterhalten, so lange der Verstellring 10 nicht klemmkraftfrei ist. Gegebenenfalls wird eine Rückdrehung des Antriebsritzels 15 nicht nur durch die formschlüssig eingreifende Klinkenzunge 20, sondern auch durch die ein- oder mehrzüngige Sperrklinke verhindert.

Beim anschließenden Ausrücken der Kupplungsvorrichtung 1 wird die Klemmkraft gelöst, so dass sich der Verstellring 10 im Wesentlichen frei drehen kann. Daher entspannt sich der Energiespeicher 16, indem er das Antriebsritzel 15 und die Spindel 17 quer zur axialen Richtung A der Kupplungsvorrichtung 1 zurück verschiebt. Durch den Eingriff der Spindel 17 am verstellringseitigen Eingriffselement 13 verdreht die Spindel 17 bei ihrer translatorischen Bewegung in Querrichtung den Verstellring 10 relativ zur Anpressplatte 5 bzw. zu den anpressplattenseitigen Gegenrampen 12. Die Rampen 11 des Verstellrings 10 bewegen sich an den Gegenrampen hoch, wodurch sich der Abstand zwischen der hebelelementseitigen Kontaktfläche des Verstellrings 10 und der Anpressplatte 5 vergrößert.

Ferner sorgt nunmehr die Verkippung des Hebelelements 4 beim Ausrücken der Kupplungsvorrichtung in Verbindung mit dem vergrößerten Abstand zwischen der hebelelementseitigen Kontaktfläche des Verstellrings 10 und der Anpressplatte 5 dafür, dass der hebelelementseitige Radialvorsprung 22 über dem zweiten Hebelelement 24b die Antriebsklinke 8 mit Bezug auf Figur 1 weiter nach oben anheben kann, bis die Anschläge 21a, 21b mit dem zumindest einen einstellbaren Anschlag 26 in Anlage kommen. Mit Bezug auf Figur 1 ist die Anhebung nach oben so weit, dass die Klinkenzunge 20 die Zahnspitze des vorherigen Zahns überspringt.

Beim anschließenden Einrücken rastet die Klinkenzunge 20 ihrerseits in den vorherigen Zahngrund der Zahnstruktur 19 des Antriebsritzels 15 ein, womit nach der erfolgten Verschleißdetektion auch die Verschleißkompensation abgeschlossen ist. In Abhängigkeit von der Ausprägung des zu kompensierenden Kupplungsverschleißes und vom Ausrückweg des Hebelelements 4 ist es möglich, dass die zuvor beschriebene Verschleißnachstellung mehrmals durchgeführt werden muss, bis der Kupplungsverschleiß vollständig kompensiert worden ist.

Die vorangegangenen Ausführungsbeispiele betreffen eine Kupplungsvorrichtung 1 mit zumindest einer in axialer Richtung A durch ein Hebelelement 4 ein- und/oder ausrückbaren, im eingerückten Zustand reibschlüssigen Drehmomentübertragungseinrichtung 2 und zumindest einer Verschleißnachstelleinrichtung 3 zur Detektion und zur Kompensation eines Verschleißzustands der Drehmomentübertragungseinrichtung 2, wobei die Verschleißnachstelleinrichtung 3 zumindest einen drehbaren Verstellring 10, einen drehbar gelagerten und zumindest teilweise quer zur axialen Richtung A verlagerbaren Spindeltrieb 9 mit einem Energiespeicher 16 zur Drehung des Verstellrings 10, und eine Antriebsklinke 8 zum Antrieb des Spindeltriebs 9 beim Einrücken der Drehmomentübertragungseinrichtung 2 aufweist, wobei ein Relativweg der Antriebsklinke 8 einstellbar ist.

## Patentansprüche

1. Kupplungsvorrichtung (1) mit zumindest einer in axialer Richtung (A) durch ein Hebelelement (4) ein- und/oder ausrückbaren, im eingerückten Zustand reibschlüssigen Drehmomentübertragungseinrichtung (2) und zumindest einer Verschleißnachstelleinrichtung (3) zur Detektion und zur Kompensation eines Verschleißzustands der Drehmomentübertragungseinrichtung (2), wobei die Drehmomentübertragungseinrichtung (2) und/oder die Verschleißnachstelleinrichtung (3) zumindest teilweise innerhalb eines Gehäusedeckels (7) gelagert ist/sind, wobei die Verschleißnachstelleinrichtung (3) zumindest einen drehbaren Verstellring (10), einen drehbar gelagerten und zumindest teilweise quer zur axialen Richtung (A) verlagerbaren Spindeltrieb (9) mit einem Energiespeicher (16) zur Drehung des Verstellrings (10), und eine Antriebsklinke (8) zum Antrieb des Spindeltriebs (9) beim Einrücken der Drehmomentübertragungseinrichtung (2) aufweist, wobei ein Relativweg der Antriebsklinke (8) mittels zumindest eines in axialer Richtung (A) verlagerbaren Anschlags (26) im fertig montierten Zustand der Kupplungsvorrichtung (1) einstellbar ist, **dadurch gekennzeichnet, dass** der Anschlag (26) antriebsklinkenseitig angeordnet ist.

2. Kupplungsvorrichtung (1) nach Anspruch 1, wobei der Relativweg der Antriebsklinke (8) bezüglich eines Antriebsritzels (15) des Spindeltriebs (9), mit dem die Antriebsklinke (8) in Eingriff bringbar ist, einstellbar ist.

3. Kupplungsvorrichtung (1) nach Anspruch 1 oder 2, wobei der verlagerbare Anschlag (26) mittels Formschluss und/oder Kraftschluss fixierbar ist.

4. Kupplungsvorrichtung (1) nach zumindest einem der Ansprüche 1 bis 3, wobei der verlagerbare Anschlag (26) schrittweise oder stufenlos verlagerbar ist.

5. Kupplungsvorrichtung (1) nach zumindest einem der Ansprüche 1 bis 4, wobei der verlagebare Anschlag (26) von außerhalb des Gehäusedeckels (7) einstellbar ist.

## Claims

1. A clutch device (1) having at least one torque transmission device (2) which can be engaged and/or disengaged in the axial direction (A) by means of a lever element (4) and is frictionally connected in the engaged state, and at least one wear adjustment device (3) for detecting and compensating for a wear condition of the torque transmission device (2), wherein the torque transmission device (2) and/or the wear adjustment device (3) is/are mounted at least partially within a housing cover (7), wherein the wear adjustment device (3) comprises at least one rotatable adjustment ring (10), a rotatably mounted spindle drive (9) which is at least partially displaceable transversely to the axial direction (A) with an energy store (16) for rotating the adjustment ring (10), and a drive pawl (8) for driving the spindle drive (9) during engagement of the torque transmission device (2), wherein a relative travel of the drive pawl (8) is adjustable by means of at least one stop (26) displaceable in the axial direction (A) in the fully assembled state of the clutch device (1), **characterized in that** the stop (26) is arranged on the drive pawl side.

2. The clutch device (1) according to claim 1, wherein the relative travel of the drive pawl (8) is adjustable with respect to a drive pinion (15) of the spindle drive (9), using which the drive pawl (8) is engageable.

3. The clutch device (1) according to claim 1 or 2, wherein the displaceable stop (26) can be fixed in a form-fitting and/or force-fitting manner.

4. The clutch device (1) according to at least one of claims 1 to 3, wherein the displaceable stop (26) is displaceable in a stepwise or continuous manner.

5. The clutch device (1) according to at least one of claims 1 to 4, wherein the displaceable stop (26) is adjustable from outside the housing cover (7).

## Revendications

1. Dispositif d'embrayage (1) comprenant au moins un dispositif de transmission de couple (2) par friction dans un état embrayé, embrayable et/ou débrayable au moyen d'un élément de levier (4) dans une direction axiale (A) et au moins un dispositif de compensation d'usure (3) destiné à détecter et à compenser un état d'usure du dispositif de transmission de couple (2), le dispositif de transmission de couple (2) et/ou le dispositif de compensation d'usure (3) étant monté(s), au moins en partie, à l'intérieur d'un couvercle de boîtier (7), le dispositif de compensation d'usure (3) comportant au moins un anneau de commande rotatif (10), une commande à broche (9) montée en rotation et déplaçable au moins en partie transversalement à la direction axiale (A) avec un accumulateur d'énergie (16) destiné à faire tourner l'anneau de commande (10) et un cliquet d'entraînement (8) pour entraîner la commande à broche (9) lorsque le dispositif de transmission de couple (2) est embrayé, une course relative du cliquet d'entraînement (8) pouvant être réglée au moyen d'au moins une butée (26) déplaçable dans la direction axiale (A) lorsque le dispositif d'embrayage (1) est entièrement monté, **caractérisé en ce que** la butée (26) est disposée côté cliquet d'entraînement.

2. Dispositif d'embrayage (1) selon la revendication 1, dans lequel la course relative du cliquet d'entraînement (8) peut être réglée par rapport à un pignon entraîneur (15) de la commande à broche (9) avec lequel le cliquet d'entraînement (8) peut venir en prise.

3. Dispositif d'embrayage (1) selon la revendication 1 ou 2, dans lequel la butée (26) déplaçable peut être fixée à force et/ou par complémentarité de forme.

4. Dispositif d'embrayage (1) selon au moins une des revendications 1 à 3, dans lequel la butée (26) déplaçable peut être déplacée progressivement ou en continu.

5. Dispositif d'embrayage (1) selon au moins une des revendications 1 à 4, dans lequel la butée (26) déplaçable peut être réglée depuis l'extérieur du couvercle de boîtier (7).
